# EUROPEAN PATENT SPECIFICATION

(11) **EP 0 909 290 B1**
(45) Date of publication and mention of the grant of the patent: **09.10.2002**
(21) Application number: 97934042.9
(22) Date of filing: 30.06.1997
(51) Int. Cl.: C08K 3/22

(54) **HIGH-FLOWABILITY POLYAMIDE RESIN COMPOSITION**
POLYAMID ZUSAMMENSETZUNG MIT HOHER FLIESSFÄHIGKEIT
COMPOSITION DE RESINE POLYAMIDE A HAUTE FLUENCE

(30) Priority: 02.07.1996 JP 17211396
(43) Date of publication of application: 21.04.1999
(73) Proprietor: E.I. DU PONT DE NEMOURS AND COMPANY, Wilmington Delaware 19898 (US)
(72) Inventor: MIYABO, Atsushi, Maison de Issey Takeda 507, Kyoto 612 (JP)
(74) Representative: Jones, Alan John
(86) International application number: US9711524
(87) International publication number: WO98000460

(56) References cited:
- EP-A- 0 052 796
- EP-A- 0 110 573
- EP-A- 0 557 222
- WO-A-95/18178
- DE-A- 2 420 681
- US-A- 3 985 926
- US-A- 4 194 072
- DATABASE WPI Section Ch, Week 8347 Derwent Publications Ltd., London, GB; Class A23, AN 83-823317 XP002045435 & JP 58 174 440 A (UNITIKA LTD) , 13 October 1983 cited in the application

## Description

### Background of the Invention

The present invention relates to a polyamide resin composition used in molded products such as small parts and precision parts. More specifically, it relates to a high-flowability polyamide resin which has decreased viscosity.

In recent years, for molding of small parts with thin walls or precision parts by using a thermoplastic resin composition, a resin composition with a high flowability is desired. "Flowability" refers to the melt viscosity of a resin, and its ability to flow through narrow or complicated shapes. To provide a polyamide resin composition with high flowability, and decrease the viscosity of the polyamide resin, it is known to blend a metal salt of a higher fatty acid such as aluminum stearate or an amide lubricant such as ethylenebis(stearylamide). However, to achieve a significant viscosity-reducing effect by this method, it is necessary to add a large amount of the metal salt of a higher fatty acid or the amide lubricant. Therefore, it is difficult to maintain the excellent mechanical characteristics of the polyamide resin itself. Furthermore, because of such organic additive materials, there have been disadvantages in which sublimated substances adhere to the vent portions during compounding, gases are generated during molding, the so-called mold deposits adhere on the molds, etc.

On the other hand, polyamide resin compositions containing metal oxides have been conventionally known as materials to solve a variety of problems. For example, there are coating resin compositions with improved adhesiveness obtained by mixing of polyamide resins and magnesium oxide (Japanese Kokai Patent Application No. Sho 52[1977]-81357); polyamide resin compositions with improved surfaces of molded products obtained by melt kneading of 90-50 parts by weight of a polyamide resin. 10-50 parts by weight of an inorganic substance, and 0.1-5.0 parts by weight of an alkaline-earth metal oxide (Japanese Kokai Patent Application No. Sho 58[1983]-174440); flame resistant polyamide compositions with a good heat resistance characterized by comprising polyamides with an excellent heat resistance, 10-100 parts by weight of halogenated polystyrene, 0.5-50 parts by weight of sodium antimonate, and 0.05-50 parts by weight of magnesium oxide and/or zinc oxide on the basis of 100 parts by weight of said polyamides (Japanese Kokoku Patent No. Hei 8[1996]-19327); and polyamide resin compositions with excellent heat-releasing characteristics characterized by the fact that they consist of 5-40 wt% of the polyamide resin and 95-65 wt% of magnesium oxide having a purity of at least 90% and an average particle diameter of 0.5-70 µm (Japanese Kokai Patent Application No. Hei 1[1989]-213356). However, they cannot provide resin compositions with a decreased melt viscosity and an improved flowability.

Furthermore, as a method for the viscosity adjustment of a resin composition using a metal oxide, there is an unsaturated polyester resin composition with the addition of a viscosityadjusting agent of a metal oxide, a metal hydroxide, or the like subjected to a coating treatment with a high polymeric material (Japanese Kokoku Patent No. Sho 52[1977]-19579). However, the unsaturated polyester resin composition is a thermosetting resin. Further by addition of a viscosity-adjusting agent, it can be increased to the desired viscosity. This cannot provide a polyamide resin composition with a reduced melt viscosity.

Thus, to solve the previously mentioned problems in conventional methods for the reduction of viscosities of polyamide resins, the present invention has an objective of providing a polyamide resin composition with high flowability, by blending a small amount of a certain type of a metal oxide in a specific polyamide resin while the excellent mechanical characteristics of the polyamide resin are being maintained.

### Summary of the Invention

This invention is the use of metal oxides in a polyamide resin composition, to reduce the melt viscosity comprising (1) a polyamide resin which, in turn. comprises an aliphatic dicarboxylic acid as a monomer component, and (2) a metal oxide which is magnesium oxide, zinc oxide, or mixtures thereof, the amount of said oxides being in the range 0.2-4.0 wt% of the weight of said aliphatic dicarboxylic acid. Magnesium oxide is preferred.

### Detailed Description of the Invention

As used herein the term "polyamide resin composition" means polyamide resins mixed with other materials. "Polyamide resin" means the polymer alone.

The polyamide resin used in the present invention is a polyamide resin containing an aliphatic dicarboxylic acid unit as a monomer component. The polyamide resins containing aliphatic dicarboxylic acid components are the polyamide resins containing adipic acid, sebacic acid, azelaic acid, dodecandioic acid, and other aliphatic dicarboxylic acids as the monomer components. Preferably, it is a polyamide resin containing adipic acid as the monomer component. The aliphatic dicarboxylic acid components may be straight chains or branched chains. These may be used alone or in combination of two or more types.

As the polyamide resins containing aliphatic dicarboxylic acid components, specifically, it is possible to mention (1) polyamide resins obtained by the polycondensation of aliphatic dicarboxylic acids and one or more diamines selected from the group consisting of aliphatic alkylenediamine, aromatic diamine, and alicyclic diamine, and (2) polyamide resins obtained by the copolymerization of aliphatic dicarboxylic acids and aromatic dicarboxylic acids and one or more of diamines selected from a group consisting of aliphatic alkylenediamine, aromatic diamine, and alicyclic diamine, and a blend of these.

The aliphatic alkylenediamines may be straight chains or branched chains. These may be used alone or in combination of two or more types. Specific examples of these aliphatic alkylenediamines are ethylenediamine, trimethylenediamine, tetramethylenediamine, pentamethylenediamine, hexamethylenediamine, 1,7-diaminoheptane, 1,8-diaminooctane, 1.9-diaminononane, 1,10-diaminodecane, 2-methylpentamethylenediamine, and 2-ethyltetramethylenediamine.

The aromatic diamines may be used alone or in combination of two or more types. Specific examples are para-phenylenediamine, ortho-phenylenediamine. meta-phenylenediamine, para-xylilenediamine, and meta-xylilenediamine.

The alicyclic alkylenediamines may be used alone or in combination of two or more types. Specifically, examples are 1,3-diaminocyclohexane, 1,4-diaminocyclohexane, 1,3-bis(aminomethyl)cyclohexane. bis(aminomethyl)cyclohexane, bis(4-aminocyclohexyl)methane. 4,4'-diamino-3,3'-dimethyldicyclohexyl methane, isophoronediamine, and piperazine.

The aromatic dicarboxylic acids may be used alone or in combination or two or more types. Specific examples are terephthalic acid, isophthalic acid, phthalic acid, 2-methylterephthalic acid, naphthalenedicarboxylic acid, and so on.

The preferred polyamide resins of the present invention are polyamide MXD6 obtained by the polycondensation of meta-xylilenediamine and adipic acid, polyamide 6,6 obtained by the polycondensation of hexamethylenediamine and adipic acid, polyamide 4.6 obtained by the polycondensation of adipic acid and tetramethylenediamine, and polyamide 6T/66 obtained by the copolymerization of adipic acid, terephthalic acid, and hexamethylenediamine, or blending of a polycondensate of adipic acid and hexamethylenediamine and the polycondensate of terephthalic acid and hexamethylenediamine.

In addition to the polyamide resins mentioned previously, other thermoplastic resins containing adipic acid as the monomer component can be used, for example, aliphatic polyester resins used in biodegradable plastics.

The metal oxides used in the present invention are magnesium oxide, zinc oxide, and mixtures thereof. Magnesium oxide is preferred. Commercially available magnesium oxide and zinc oxide may be used. Their purities and particle diameters have no special effects on the effectiveness of the present invention. Irrespective of whether other inorganic fillers described below are present, the amount of metal oxide is 0.2-4.0 wt%, preferably 0.4-3.0 wt%, especially preferably 0.6-2.0 wt%, based on the weight of the aliphatic dicarboxylic acid in the polyamide resin. If less than 0.2 wt%, even if the viscosity of the polyamide resin can be adjusted, a composition having a uniform viscosity cannot be obtained because of the poor dispersibility. If it exceeds 4.0 wt%, not only are physical properties markedly decreased, but inconveniences like the formation of silver on the surface of the molded product occur.

Although details are not clear, for the polyamide resin composition of the present invention, since the reaction between the previously mentioned polyamide resin in the molten state and magnesium oxide and/or zinc oxide breaks the molecular chains of the polyamide resin, it is believed that the molecular weight is decreased and the viscosity is thus reduced.

The inorganic fillers that may also be used in the present invention are inorganic fillers commonly used to reinforce engineering plastics. Specifically, glass fibers, glass flakes, kaolin, clay, talc, wallastonite, calcium carbonate, silica, carbon fibers, potassium titanate, and so on are available. In particular, glass fibers are preferred. The amount of the inorganic filler to be blended can be appropriately decided according to the polyamide resin to be used. Ordinarily, it is 5-65 wt% or so based on the weight of the composition. By blending the appropriate amount of the inorganic fillers, the original mechanical characteristics of the polyamide resin can be maintained.

Furthermore, for the aromatic polyamide compositions used in the present invention, to an extent without damaging their characteristics, it is possible to blend in heat stabilizers, plasticizers, antioxidants, nucleating agents, dyes, pigments, mold-release agents, flame retardants, impact modifiers, and other additives in addition to the components mentioned previously.

The polyamide resin compositions used in the present invention can be manufactured by any known manufacturing methods. For example, by using a twin-screw extruder, the previously mentioned polyamide resin and metal oxide are simultaneously kneaded.

### Examples of the Invention and Comparative Showings

The present invention will be explained by the examples. However, the present invention is not to be restricted to these examples.

### Examples 1-11 and Comparative Showings 1-16

The various components shown in Tables I and II were dry blended and melt kneaded with a twin-screw extruder (ZSK-40. manufactured by W & P Co.). After water cooling, pellets were made. By using the pellets obtained, 13 mm x 130 mm x 3.2 mm test specimens were molded at the following mold temperatures:
Polyamide 66: 65°C, glass-reinforced polyamide 66: 95°C
Polyamide 6T/66: 95°C, glass-reinforced polyamide 6T/66: 120°C
Polyamide 6T/DT: 95°C, glass-reinforced polyamide 6T/DT: 120°C

The melt viscosity, flowability, mechanical properties, and appearance were measured in the following manner:

### (1) Melt viscosity

By using a rheometer manufactured by Kayeness Co., the melt viscosities of the pellets obtained were measured at a shear rate of 1000/sec and at a resin temperature of 280°C for polyamide 66 and 330°C in the case of polyamide 6T/66 and 6T/DT after a residence time of 3 min in each case.

### (2) Flowability

The flow length was measured with a spiral flow with an injection pressure of 1000 kg/cm² or 700 kg/cm² and a thickness of 1 mm or 2 mm at the following resin temperatures and mold temperatures.

### Resin temperatures

Polyamide 66: 290°C, glass reinforced polyamide 66: 290°C
Polyamide 6T/66: 325°C, glass-reinforced polyamide 6T/66: 325°C
Polyamide 6T/DT: 325°C, glass-reinforced polyamide 6T/DT: 325°C

### Mold temperatures

Polyamide 66: 65°C, glass-reinforced polyamide 66: 95°C
Polyamide 6T/66: 95°C, glass-reinforced polyamide 6T/66: 120°C
Polyamide 6T/DT: 95°C, glass-reinforced polyamide 6T/DT: 120°C

### (3) Mechanical properties

The mechanical properties of the molded products were measured according to the following:
Heat deflection temperature JIS K 7207 (unreinforced: 4.6 kg/cm² load, glass-reinforced: 18.5 kg/cm² load)
Tensile strength ASTM D638
Elongation ASTM D638
Flexural modulus ASTM D790
Flexural strength ASTM D790
Notched Izod impact strength ASTM D256

### (4) Appearance

The appearance and the moldability of the molded products obtained were observed visually.

The results of the examples and the comparative showings using the glass-unreinforced compositions are shown in Tables I and II. The results of the examples and the comparative showings using glass-reinforced compositions are shown in Tables III and IV. The various components in the tables are as follows:
- 66:: Polyamide 66 (Zytel® 101, manufactured by DuPont Co.)
- 6T/66:: An aromatic polyamide consisting of terephthalic acid/hexamethylenediamine and adipic acid/hexamethylenediamine (terephthalic acid/hexamethylenediamine : adipic acid/hexamethylenediamine = 55:45
- 6T/DT:: An aromatic polyamide consisting of terephthalic acid/hexamethylenediamine and terephthalic acid/2-methylpentamethylene diamine (terephthalic acid/hexamethylenediamine : terephthalic acid/2-methypentamethylene diamine = 50:50
- MgO:: Magnesium oxide (Micromag 3-150, manufactured by Kyowa Chemical Co., Ltd.)
- ZnO:: Zinc oxide (first grade reagent, manufactured by Wako Pure Drug Co., Ltd.)
- Glass:: Glass fibers (3 mm length chopped strands, manufactured by Nippon Plate Glass Co., Ltd.)

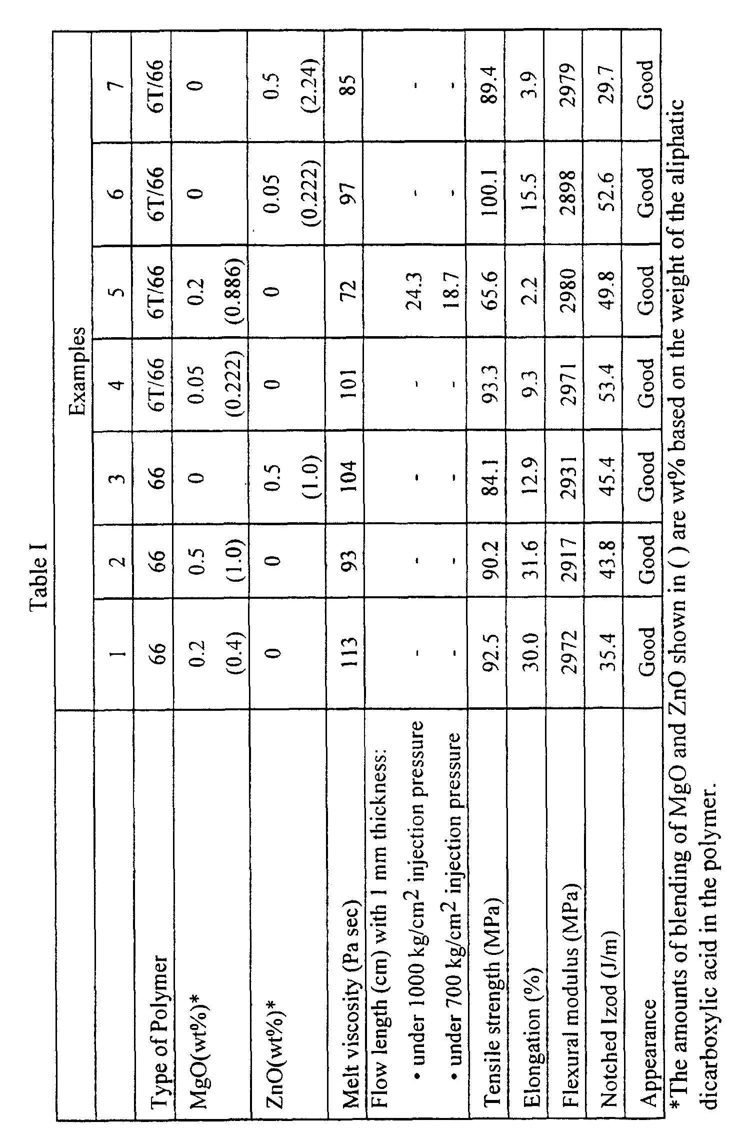

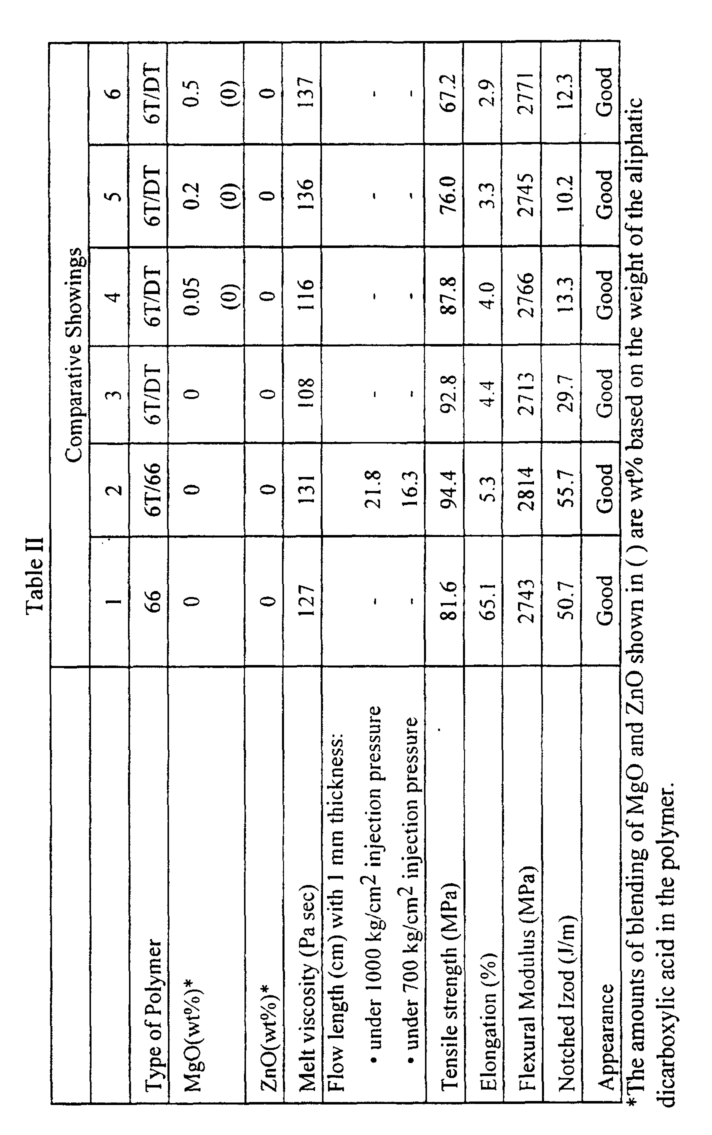

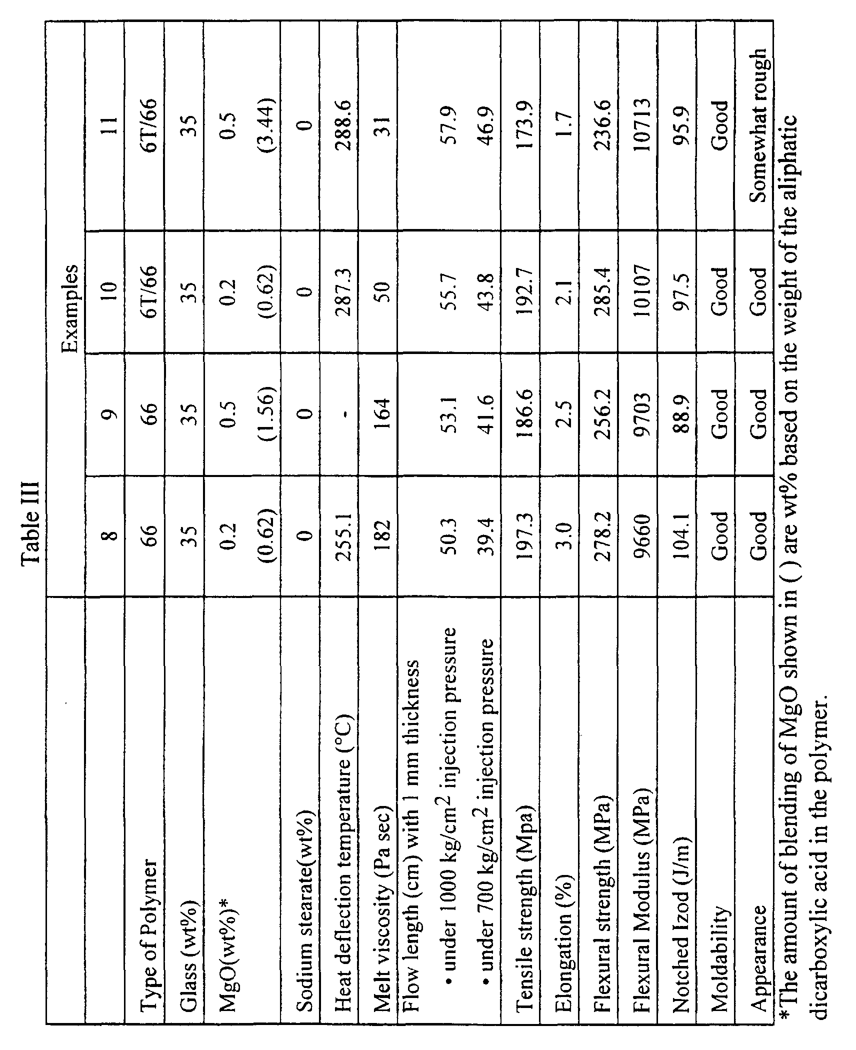

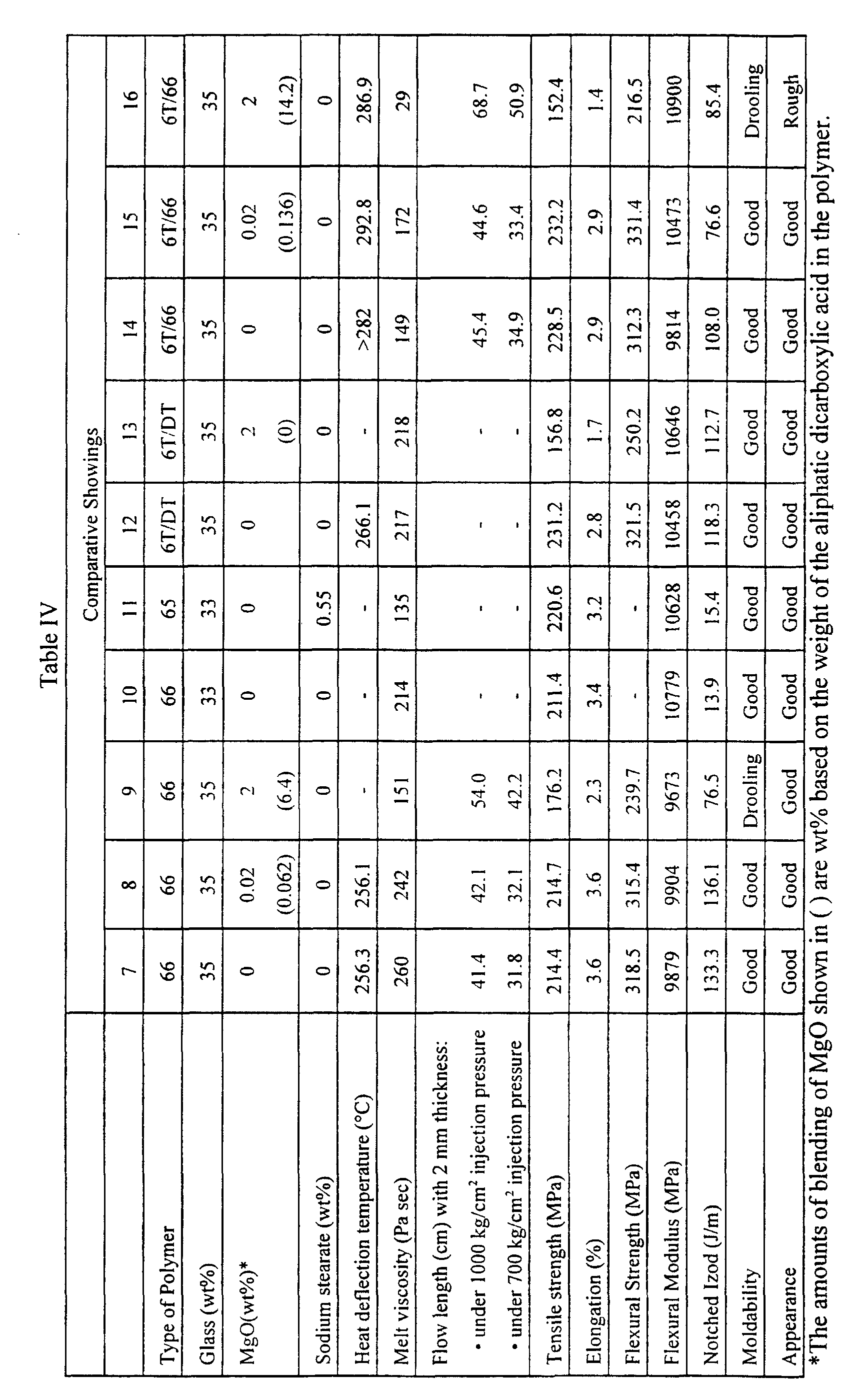

By the comparison of Examples 1-3 and Comparative Showing 1 as unreinforced polyamide 66 resin compositions containing no glass, and by the comparison of Examples 4-7 and Comparative Showing 2 as polyamide 6T/66 resin compositions containing no glass, as long as they are polyamides containing aliphatic dicarboxylic acid components, irrespective of the types of the polyamide resins, it has been found that the melt viscosity is decreased by blending of magnesium oxide or zinc oxide. Next, by the comparison of Examples 8-9 and Comparative Showing 7 as the reinforced polyamide 66 resin compositions containing glass, and by the comparison of Examples 10-11 and Comparative Showing 14 as the reinforced polyamide 6T/66 resin compositions containing glass, even if the polyamide resins contain glass, it has been found that the effect of decreasing the melt viscosity can be obtained.

By the comparison of Examples 8 and 10 with the blending of magnesium oxide with Comparative Showing 11 with the blending of sodium stearate, to obtain the melt-viscosity reducing effectiveness of approximately the same level, it has been found that the content of sodium stearate is at least twice that of magnesium oxide. Furthermore, it has been found that the reduction in the notched Izod impact strength is remarkable.

From the results of Comparative Showings 8 and 15, it has been found that a sufficient effectiveness cannot be obtained if the amount of blending of magnesium oxide is less than 0.2 wt% based on the weight of the aliphatic dicarboxylic acid component.

For Comparative Showing 9 as the polyamide 66 resin composition containing glass and Comparative Showing 16 as the polyamide 6T/66 resin composition, drooling occurs if the amount of blending of magnesium oxide is large. Also, for 6T/66, the surface of the molded products is rough.

Comparative Showings 3-6 are the compositions using polyamide 6T/DT as a polyamide resin. However, even if magnesium oxide is blended, a reduction in the melt viscosity cannot be observed. If the amount of blending is large, it is seen that the viscosity is even higher. For Comparative Showings 12-13 with glass blending, it is seen that the viscosity-reducing effectiveness cannot be observed by blending of magnesium oxide in the same manner as 6T/DT.

The value of the melt viscosity in Example 1 is smaller than the value of the melt viscosity of Comparative Showing 1 by 14. On the other hand, the value of the melt viscosity in Example 5 is smaller than the value of the melt viscosity of Comparative Showing 2 by 59. This shows that even if the same amount of magnesium oxide is blended with respect to the weight of the composition, since the amount of blending of magnesium oxide is based on the aliphatic dicarboxylic acid component is larger for 6T/66 in Example 5 than that for 66 in Example 1, the reducing effectiveness for the melt viscosity is high. Furthermore, if the value of the melt viscosity in Example 2 with the blending amount somewhat larger than the blending amount of magnesium oxide based on the aliphatic dicarboxylic acid component in Example 5 is compared with the value of the melt viscosity in Comparative Showing 1, it is seen that the value in Example 2 is smaller than the value in Comparative Showing 1 by 34. Despite the fact that the blending amount of magnesium oxide based on the aliphatic dicarboxylic acid component is larger for Example 2 than Example 5, it shows that the reducing effectiveness of the melt viscosity is small. This is believed to be due to the fact that the molecular-weight-reduction reaction is accelerated because the process temperature is higher for polyamide 6T/66.

By the comparison of Examples 1-3 and Comparative Showing 1, and by the comparison of Examples 4-7 and Comparative Showing 2 in the same manner, it has been found that elongation and the notched Izod impact strength are decreased by blending of metal oxides. However, by the comparison of Examples 8-9 and Comparative Showing 7 as glass-containing compositions, and by the comparison of Examples 10-11 and Comparative Showing 14, a major change is not seen in the mechanical properties and the heat deflection temperature as one of the measures representing thermal stability in any case.

If Example 2 and Example 3 are compared for blending of magnesium oxide and zinc oxide at the same amount, it has been found that the magnesium oxide has a higher viscosity-reducing effectiveness.

### Effect of the Invention

As explained above, by decreasing the melt viscosity of the polyamide resin, the polyamide resin composition of the present invention realizes a polyamide resin composition with a high flowability. It is possible to provide a polyamide resin composition that can be used well in the molding of small parts and precision parts.

## Claims

1. Use of from 0.2 - 4 wt% metal oxide selected from magnesium oxide, zinc oxide and mixtures thereof to reduce the melt viscosity of a polyamide resin containing an aliphatic dicarboxylic acid monomer component wherein the wt% of the metal oxide is based on the weight of said aliphatic dicarboxylic acid.

2. Use according to claim 1, wherein the metal oxide is magnesium oxide.

3. Use according to claim 1 or 2, wherein the amount of metal oxide is 0.4 to 3 wt% based on the weight of said dicarboxylic acid.

4. Use according to claim 1, 2 or 3 wherein the aliphatic dicarboxylic acid is adipic acid.

## Patentansprüche

1. Verwendung vom 0,2% bis 4,0 Gewichtsprozent Metalloxid, ausgewählt aus Magnesiumoxid, zinkoxid und Mischungen davon, um die Schmelzeviskosität eines Polyamidharzes zu verringern, das eine aliphatische Dicarbonsäure-Monomerkomponente enthält, wobei die Gewichtsprozent des Metalloxids bezogen sind auf das Gewicht der aliphatischen Dicarbonsäure.

2. Verwendung nach Anspruch 1, wobei das Metalloxid Magnesiumoxid ist.

3. Verwendung nach Anspruch 1 oder 2, wobei die Menge des Metalloxids bezogen auf das Gewicht der Dicarbonsäure 0,4% bis 3 Gewichtsprozent beträgt,

4. Verwendung nach Anspruch 1, 2 oder 3, wobei die aliphatische Dicarbonsäure Adipinsäure ist.

## Revendications

1. Utilisation d'une quantité comprise entre 0,2 et 4% en poids d'un oxyde de métal choisi parmi l'oxyde de magnésium, l'oxyde de zinc et des mélanges de ceux-ci afin de réduire la viscosité d'une résine de polyamide contenant une composante d'un monomère d'un acide dicarboxylique aliphatique, dans laquelle le pourcentage en poids de l'oxyde de métal est basé sur le poids dudit acide dicarboxylique aliphatique.

2. Utilisation suivant la revendication 1, dans laquelle l'oxyde de métal est l'oxyde de magnésium.

3. Utilisation suivant la revendication 1 ou 2, dans laquelle la quantité d'oxyde de métal est comprise entre 0,4 et 3% en poids du poids dudit acide dicarboxylique.

4. Utilisation suivant la revendication 1, 2 ou 3, dans laquelle l'acide dicarboxylique aliphatique est l'acide adipique.
